# EUROPEAN PATENT APPLICATION

(11) **EP 4 656 686 A1**
(43) Date of publication of application: **03.12.2025**
(21) Application number: 24747195.6
(22) Date of filing: 18.01.2024
(51) Int. Cl.: C08L 83/07, C08L 83/05, C09J 11/04, C09J 183/04

(54) **ADDITION CURE SILICONE COMPOSITION, CURED SILICONE PRODUCT AND JOINING MEMBER, AND METHOD FOR DISMANTLING JOINING MEMBER**

(30) Priority: 23.01.2023 JP 2023007793
(71) Applicant: SHIN-ETSU CHEMICAL CO., LTD., Tokyo 1000005 (JP); The University of Osaka, Osaka 565-0871 (JP)
(72) Inventor: AKETA Takashi, Annaka-shi, Gunma 379-0224 (JP); OZAI Toshiyuki, Annaka-shi, Gunma 379-0224 (JP); NAKAGAWA Hideo, Tokyo 100-0005 (JP); KURASHIKI Tetsusei, Suita-shi, Osaka 565-0871 (JP); MUKOYAMA Kazutaka, Suita-shi, Osaka 565-0871 (JP)
(74) Representative: Ter Meer Steinmeister & Partner
(86) International application number: PCT/JP2024/001220
(87) International publication number: WO 2024/157866

(57) **Abstract**

This addition cure silicone compound comprises:
100 parts by mass of an organopolysiloxane (A) having at least two alkenyl groups bonded to a silicon atom in a molecule;
0.1 to 10 parts by mass of a linear organohydrogen polysiloxane (B) having at least two hydrogen atoms bonded to a silicon atom in a molecule;
0.1 to 10 parts by mass of an organosilicon compound (C) having an arylene skeleton and a hydrogen atom bonded to a silicon atom; and
1 to 100 parts by mass of a hydrosilylation reaction catalyst (D) and
a particle (E) that generates heat as a result of microwave irradiation.
The addition cure silicone composition does not undergo a decrease in adhesiveness nor adhere to a member even when exposed to a high-temperature environment of around 150°C, and provides a cured product that easily peels from the member in a short time with less energy consumption.

## Description

### TECHNICAL FIELD

This invention relates to an addition curable silicone composition, a silicone cured product thereof, a joined assembly, and a method for disassembling the joined assembly.

### BACKGROUND ART

From the standpoint of reducing the environmental load and cost associated with the recovery, repair and recycling of vehicle parts, typically vehicle-mounted electric parts, and electric and electronic parts, a study is made on the method of disassembling members bonded with an adhesive. The joined assembly must fulfil the contradictory performance requirements, tight adhesion and ease of disassembly or possible peeling in need.

As the method of disassembling a joined assembly, for example, Patent Document 1 proposes an adhesive having added a foaming agent or microcapsules which expand upon heating and Patent Documents 2 and 3 propose disintegrable adhesives having hot melt or thermal decomposition properties.

Silicone-base adhesives and sealing agents are widely used in vehicle, electric/electronic, building and other fields because they have excellent heat resistant and weather resistant properties.

The silicone-base adhesives, however, are difficult to disassemble, recover and repair because the silicone-base adhesive is tenaciously bonded to members by heat. In the application where members are bonded or joined with the silicone-base adhesive, there is a need for a recyclable joined assembly and its disassembling method.

For example, Patent Document 4 discloses a curable liquid silicone-base adhesive comprising a specific proportion of aluminum hydroxide which decomposes at about 160°C. The joined assembly which is bonded with this adhesive maintains sealing performance at room temperature and even at elevated temperatures of about 150°C. Upon exposure to a high temperature in excess of 160°C, the sealing performance is reduced to such an extent that members may be easily separated apart.

### PRIOR ART DOCUMENTS

### PATENT DOCUMENTS

| | |
|---|---|
| Patent Document 1: | JP-A 2002-187973 |
| Patent Document 2: | JP-A 2004-231808 |
| Patent Document 3: | JP-A 2015-196793 |
| Patent Document 4: | JP-A 2022-183437 |

### SUMMARY OF INVENTION

### TECHNICAL PROBLEM

Since the thermally disintegrable adhesive of Patent Document 4 undergoes a lowering of adhesion at high temperature, it cannot be used in bonding parts for use in a high-temperature environment. Also, heating in a heating furnace for several hours is necessary, leaving the problem of a vast amount of energy consumption.

An object of the invention, which has been made under the above-mentioned circumstances, is to provide an addition curable silicone composition which cures into a cured product which does not undergo a lowering of adhesion and bonding to members even when exposed to a hot environment near 150°C, but is easily separable from the members by consumption of a small amount of energy for a short time; a joined assembly having a plurality of members joined with a cured product of the composition; and a method for disassembling the joined assembly.

### SOLUTION TO PROBLEM

Making extensive investigations to attain the above object, the inventors have found that an addition curable silicone composition comprising specific amounts of a specific organosilicon compound and particles capable of heat generation with microwave cures into a cured product which does not undergo a lowering of adhesion and bonding to members even when exposed to a hot environment near 150°C, but is easily separable from the members by consumption of a small amount of energy for a short time. The invention is predicated on this finding.

The invention is as defined below.
1. An addition curable silicone composition comprising
   (A) 100 parts by weight of an organopolysiloxane having at least two silicon-bonded alkenyl groups per molecule,
   (B) 0.1 to 10 parts by weight of a linear organohydrogenpolysiloxane having at least two silicon-bonded hydrogen atoms per molecule,
   (C) 0.1 to 10 parts by weight of an organosilicon compound bearing an arylene skeleton and having a silicon-bonded hydrogen atom,
   (D) a hydrosilation reaction catalyst, and
   (E) 1 to 100 parts by weight of particles capable of heat generation on microwave irradiation.
2. The silicone composition of 1 wherein component (C) is an organosilicon compound having the general formula (1): 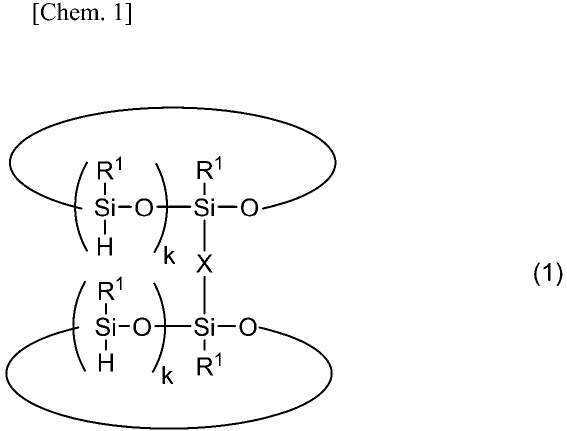 wherein R¹ is each independently a C₁-C₆ alkyl group, X is a divalent organic group which has one or more phenylene skeletons and may contain an ether bond, and k is each independently an integer of 3 to 5.
3. The silicone composition of 2 wherein X is a group having the formula (2), (3) or (4): 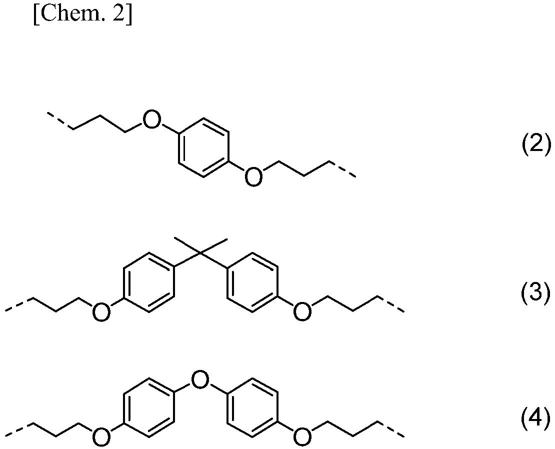 wherein the broken line designates a point of attachment to a silicon atom.
4. The silicone composition of 1 wherein the particles capable of heat generation on microwave irradiation are particles containing at least one member selected from carbon, iron oxide, titanium oxide and silicon carbide.
5. A silicone cured product obtained by curing the addition curable silicone composition of any one of 1 to 4.
6. A joined assembly comprising a plurality of members bonded by the cured product of 5.
7. The joined assembly of 6 wherein at least one of the plurality of members is formed of a polyphenylene sulfide resin.
8. A method for disassembling the joined assembly of 6, comprising the steps of irradiating the cured product with microwave and separating the plurality of members apart.
9. The disassembling method of 7 wherein the disassembling step includes peeling the cured product of the addition curable silicone composition from the plurality of members using peeling means.

### ADVANTAGEOUS EFFECTS OF INVENTION

The addition curable silicone composition of the invention cures into a cured product which does not undergo a lowering of adhesion and bonding to members even when exposed to a hot environment near 150°C, but undergoes a lowering of adhesion and/or sealing performance upon microwave irradiation. A joined assembly which is joined with the cured product, for example, a joined assembly in which a plurality of (specifically two) members of organic resin and/or metal are joined can be disassembled by microwave irradiation, that is, by consumption of a small amount of energy for a short time. Then the members can be easily recycled.

The cured product of the addition curable silicone composition having such properties is advantageously used as the adhesive or sealing agent at the joint site to be heat resistant and recycled.

### DESCRIPTION OF EMBODIMENTS

Now the invention is described in detail.

### [Addition curable silicone composition]

The invention provides an addition curable silicone composition comprising components (A) to (E):
(A) an organopolysiloxane having at least two silicon-bonded alkenyl groups per molecule,
(B) a linear organohydrogenpolysiloxane having at least two silicon-bonded hydrogen atoms per molecule,
(C) an organosilicon compound bearing an arylene skeleton and having a silicon-bonded hydrogen atom,
(D) a hydrosilation reaction catalyst, and
(E) particles capable of heat generation on microwave irradiation.

### [1] Component (A)

Component (A) is an organopolysiloxane having at least two silicon-bonded alkenyl groups per molecule.

As the alkenyl group, alkenyl groups of 2 to 8 carbon atoms are preferred though not limited thereto. Examples include vinyl, allyl, butenyl, pentenyl, hexenyl and heptenyl, with vinyl being most preferred.

The position of attachment of the alkenyl group in component (A) is not particularly limited and may be either the end or side chain of the molecular chain. The attachment of an alkenyl group at the molecular chain end is preferred.

Component (A) contains organic groups other than the silicon-bonded alkenyl group, which are not particularly limited. Included are substituted or unsubstituted, monovalent hydrocarbon groups of preferably 1 to 18 carbon atoms, more preferably 1 to 12 carbon atoms, even more preferably1 to 10 carbon atoms, most preferably 1 to 7 carbon atoms.

Examples of the organic group include alkyl groups such as methyl, ethyl, propyl, butyl, pentyl, hexyl and heptyl; aryl groups such as phenyl, tolyl, xylyl and naphthyl; aralkyl groups such as benzyl and phenethyl; and halogenated alkyl groups such as chloromethyl, 3-chloropropyl and 3,3,3-trifluoropropyl. Inter alia, methyl and phenyl are preferred.

Examples of the molecular structure of component (A) include straight, partially branched straight, cyclic, and three-dimensional network structures.

Component (A) should preferably have a viscosity at 25°C of 100 to 500,000 mPa·s, more preferably 300 to 100,000 mPa·s, as viewed from the physical properties of the resulting cured product and ease of handling of the composition. Notably, the viscosity can be measured by a Brookfield rotational viscometer.

Examples of component (A) include molecular chain both end trimethylsiloxy-capped dimethylsiloxane/methylvinylsiloxane copolymers, molecular chain both end trimethylsiloxy-capped methylvinylpolysiloxane, molecular chain both end trimethylsiloxy-capped dimethylsiloxane/methylvinylsiloxane/methylphenylsiloxane copolymers, molecular chain both end dimethylvinylsiloxy-capped dimethylpolysiloxane, molecular chain both end dimethylvinylsiloxy-capped methylvinylpolysiloxane, molecular chain both end dimethylvinylsiloxy-capped dimethylsiloxane/methylvinylsiloxane copolymers, molecular chain both end dimethylvinylsiloxy-capped dimethylsiloxane/methylvinylsiloxane/methylphenylsiloxane copolymers, molecular chain both end trivinylsiloxy-capped dimethylpolysiloxane, organopolysiloxane copolymers consisting of siloxane units: R³₃SiO_{0.5}, siloxane units: R³₂R⁴SiO_{0.5}, units: R³₂SiO, and siloxane units: SiO₂, organopolysiloxane copolymers consisting of siloxane units: R³₃SiO_{0.5}, siloxane units: R³₂R⁴SiO_{0.5}, and siloxane units: SiO₂, organopolysiloxane copolymers consisting of siloxane units: R³₂R⁴SiO_{0.5}, siloxane units: R³₂SiO, and siloxane units: SiO₂, organopolysiloxane copolymers consisting of siloxane units: R³R⁴SiO and siloxane units: R³SiO_{1.5} or siloxane units: R⁴SiO_{1.5}, and mixtures of two or more of the foregoing. Herein R³ is a monovalent hydrocarbon group other than alkenyl, i.e., the aforementioned organic group other than the silicon-bonded alkenyl, preferably methyl or phenyl. R⁴ is an alkenyl group, i.e., any of the above-mentioned alkenyl groups, preferably vinyl. Component (A) may be used alone or in admixture of two or more.

### [2] Component (B)

Component (B) is a linear organohydrogenpolysiloxane having at least two, preferably at least three silicon-bonded hydrogen atoms (i.e., SiH groups) per molecule. The position of attachment of the SiH group in component (B) is not particularly limited and may be either the end or side chain of the molecular chain.

Component (B) contains organic groups other than the SiH group, examples of which are the same as exemplified above as the organic group other than the silicon-bonded alkenyl group in component (A). Included are monovalent hydrocarbon groups of preferably 1 to 10 carbon atoms, more preferably 1 to 7 carbon atoms. Substituted or unsubstituted alkyl groups of 1 to 3 carbon atoms and phenyl are more preferred.

Examples of the substituted or unsubstituted alkyl groups of 1 to 3 carbon atoms include methyl and 3,3,3-trifluoropropyl.

Examples of component (B) include 1,1,3,3-tetramethyldisiloxane; cyclic methylhydrogenpolysiloxanes such as 1,3,5,7-tetramethyltetracyclosiloxane and 1,3,5,7,8-pentamethylpentacyclosiloxane; molecular chain both end trimethylsiloxy-capped methylhydrogenpolysiloxane, molecular chain both end trimethylsiloxy-capped dimethylsiloxane/methylhydrogensiloxane copolymers, molecular chain both end silanol-capped methylhydrogenpolysiloxane, molecular chain both end silanol-capped dimethylsiloxane/methylhydrogensiloxane copolymers, molecular chain both end dimethylhydrogensiloxy-capped dimethylpolysiloxane, molecular chain both end dimethylhydrogensiloxy-capped methylhydrogenpolysiloxane, and molecular chain both end dimethylhydrogensiloxy-capped dimethylsiloxane/methylhydrogensiloxane copolymers. Component (B) may be used alone or in admixture of two or more.

Component (B) should preferably have a weight average molecular weight (Mw) of 100 to 10,000, more preferably 200 to 5,000. Mw can be measured by gel permeation chromatography (GPC) versus polystyrene standards.

The amount of component (B) blended is 0.1 to 10 parts by weight, preferably 0.5 to 8 parts by weight per 100 parts by weight of component (A). The amount is such that the number ratio of silicon-bonded hydrogen atoms (i.e., SiH groups) in component (B) to alkenyl groups in component (A) may range from 0.1/1 to 5.0/1, more preferably from 0.5/1 to 4/1. An amount of less than 0.1 part by weight leads to a lack of curability whereas an amount in excess of 10 parts by weight may result in a brittle cured product.

### [3] Component (C)

Component (C) is an organosilicon compound bearing an arylene skeleton and having at least one, preferably 1 to 20, more preferably 2 to 10 silicon-bonded hydrogen atoms (or SiH groups), which functions as a tackifier.

Exemplary arylene skeletons include divalent aromatic groups such as phenylene, naphthylene and anthracenylene, with phenylene being preferred.

The organic groups other than the SiH group include substituted or unsubstituted, monovalent organic groups of preferably 1 to 18 carbon atoms, more preferably 1 to 12 carbon atoms, even more preferably 1 to 6 carbon atoms. Examples include alkyl groups such as methyl, ethyl, propyl, butyl, pentyl, hexyl and heptyl; aryl groups such as phenyl, tolyl, xylyl and naphthyl; aralkyl groups such as benzyl and phenethyl; halogenated alkyl groups such as chloromethyl, 3-chloropropyl and 3,3,3-trifluoropropyl; alkenyl groups such as vinyl, allyl, butenyl, pentenyl, hexenyl and heptenyl; epoxy groups such as glycidoxy; alkoxysilyl groups such as trimethoxysilyl, triethoysilyl and methyldimethoxysilyl; and functional groups such as ester, acryloyl, methacryloyl, anhydrous carboxy, isocyanate, amino and amide. Inter alia, methyl is preferred.

The organosilicon compound as component (C) is preferably a compound having the general formula (1).

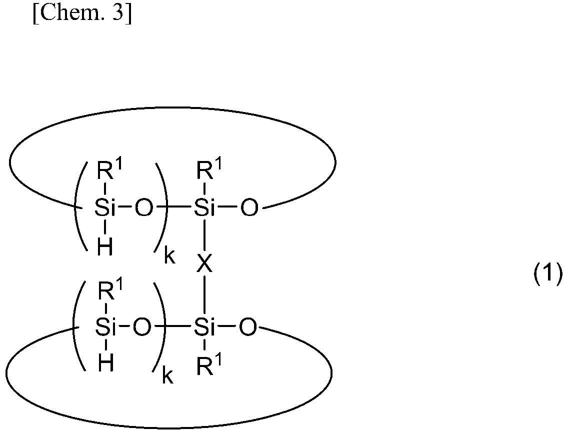

In formula (1), R¹ is each independently a C₁-C₆ alkyl group, X is a divalent organic group which has one or more phenylene skeletons and may contain an ether bond, and k is each independently an integer of 3 to 5.

Examples of the C₁-C₆ alkyl group R¹ include methyl, ethyl, propyl, butyl, pentyl, and hexyl, with methyl being preferred.

The divalent organic group X is preferably a group having the formula (2), (3), (4) or (5), more preferably the formula (2), (3) or (4).

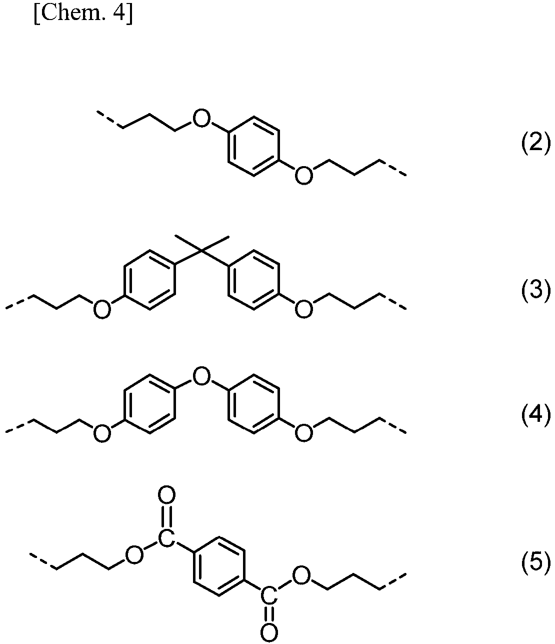

Herein the broken line designates a point of attachment to a silicon atom.

Examples of component (C) include those of the following structural formulae. Component (C) may be used alone or in admixture of two or more.

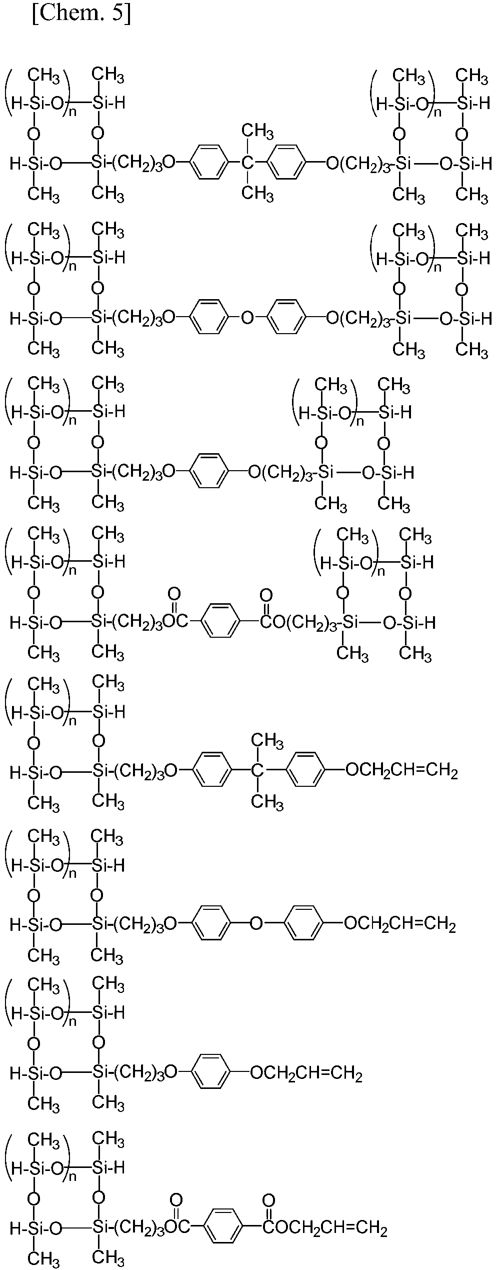

Herein n is independently an integer of 1 to 3.

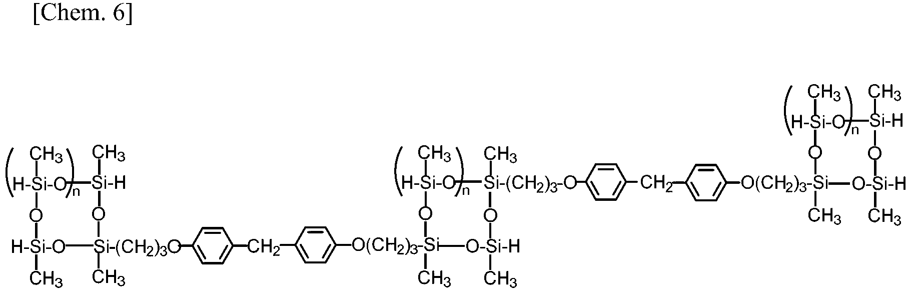

Herein n is independently an integer of 1 to 3.

The amount of component (C) blended is 0.1 to 10 parts by weight, preferably 0.1 to 9 parts by weight, more preferably 0.2 to 8 parts by weight per 100 parts by weight of component (A). An amount of less than 0.1 part by weight fails to provide sufficient adhesion whereas an amount in excess of 10 parts by weight sometimes causes to degrade physical properties.

The amount is set such that the molar ratio of the total of SiH groups in the composition to the total of silicon-bonded alkenyl groups in the composition, specifically the molar ratio of SiH groups in components (B) and (C) to the total of alkenyl groups in components (A) and (C) may range from 1.0/1 to 5.0/1, more preferably from 1.2/1 to 4.0/1, even more preferably from 1.5/1 to 3.0/1.

### [4] Component (D)

Component (D) is a hydrosilation reaction catalyst, i.e., a catalyst for promoting hydrosilation reaction of alkenyl groups in component (A) with SiH groups in components (B) and (C).

Examples of the hydrosilation reaction catalyst include platinum group metals alone such as platinum (including platinum black), rhodium and palladium; platinum chlorides, chloroplatinic acids and chloroplatinates such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂ and Na₂HPtCl₄·nH₂O, wherein n is an integer of 0 to 6, preferably 0 or 6; alcohol-modified chloroplatinic acids (see USP 3,220,972); chloroplatinic acid-olefin complexes (see USP 3,159,601, USP 3,159,662 and USP 3,775,452); supported catalysts comprising platinum group metals such as platinum black and palladium on supports of alumina, silica and carbon; rhodium-olefin complexes; chlorotris(triphenylphosphine)rhodium (known as Wilkinson's catalyst); and complexes of platinum chlorides, chloroplatinic acids and chloroplatinates with vinyl-containing siloxanes. Component (D) may be used alone or in admixture.

The amount of component (D) used is a catalytic amount, preferably to provide 0.1 to 500 ppm, more preferably 0.5 to 200 ppm of platinum group metal based on the weight of component (A).

### [5] Component (E)

Component (E) is particles capable of heat generation upon receipt of microwave. Any of particles having such properties may be used. Particles having a large dielectric constant are especially preferred because they have a high absorptivity of microwave radiation and are capable of efficient heat generation in a short time. The dielectric constant is preferably 3 to 1,000, more preferably 5 to 800 at 3 GHz.

The particles capable of heat generation on microwave irradiation are particles of inorganic materials, for example, carbon such as acetylene black, furnace black, channel black, thermal black and Ketjen black; iron oxide such as iron(II) oxide, iron(III) oxide, and triiron tetroxide; titanium oxide-base compounds such as titanium oxide (TiO), titanium dioxide (TiO₂), dititanium trioxide (Ti₂O₃); ferrites such as spinel ferrite, magnetoplumbite ferrite, and garnet ferrite; and silicon carbide. Of these, a material containing at least one member selected from carbon, iron oxide, titanium oxide and silicon carbide is preferred. Acetylene black, titanium dioxide and silicon carbide are more preferred. Component (E) may be used alone or in admixture.

The particles capable of heat generation on microwave irradiation preferably have an average particle size of 0.05 to 100 µm, more preferably 0.1 to 80 µm. If the average particle size is less than 0.05 µm, the composition has such a high viscosity as to prevent heavy loading, failing to achieve a sufficient heat generating effect. An average particle size in excess of 100 µm can detract from the flexibility of rubber. It is noted that the average particle size can be measured as a cumulative weight average value D50 (or median diameter) by a particle size distribution measuring instrument according to the laser light diffraction method.

The particles capable of heat generation on microwave irradiation may be untreated or treated on their surface (hydrophobic treatment).

Examples of the treating agent used for surface treatment include alumina, silica, stearic acid, silane coupling agents, and silicone compounds. The surface treatment may be performed by well-known methods. The amount of surface treatment, which is not particularly limited, is preferably up to 10% by weight, specifically 0.1 to 8% by weight, more preferably 0.5 to 6% by weight.

The amount of component (E) is 1 to 100 parts by weight, preferably 10 to 60 parts by weight per 100 parts by weight of component (A). An amount of less than 1 part by weight is too small to provide sufficient heat generation. If the amount exceeds 100 parts by weight, the composition has an increased viscosity and becomes less dischargeable during mixing and dispensing.

### [6] Component (F)

The addition curable silicone composition may contain an addition reaction inhibitor as component (F), if necessary, for avoiding viscosity buildup or gelation prior to heat cure in the step of formulation or application to substrates.

Preferred examples of the addition reaction inhibitor include acetylene alcohol compounds and acetylene alcohol compounds whose alcoholic hydroxy group is modified with silanes or siloxanes.

The acetylene alcohol compound used herein may be one having an ethynyl group and a hydroxy group in a common molecule, preferably one having an ethynyl group and a hydroxy group bonded to a common carbon atom. Examples include those compounds of the following structural formulae.

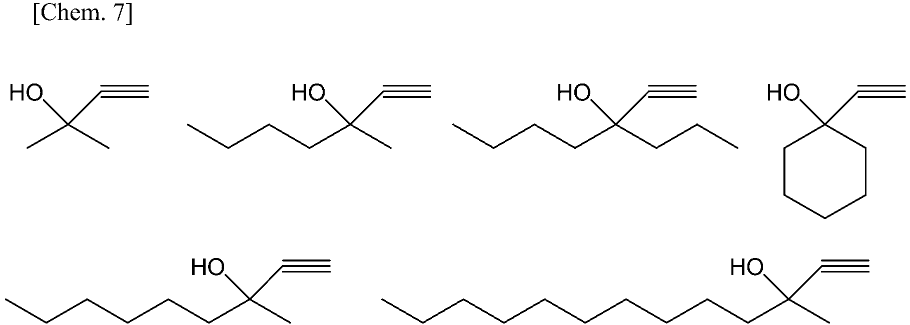

The acetylene alcohol compound whose alcoholic hydroxy group is modified with a silane or siloxane is an acetylene alcohol compound in which the hydrogen atom of the hydroxy group is replaced by a Si-O-C linkage, which is bonded to a silane or siloxane moiety. Examples include compounds of the following structural formulae.

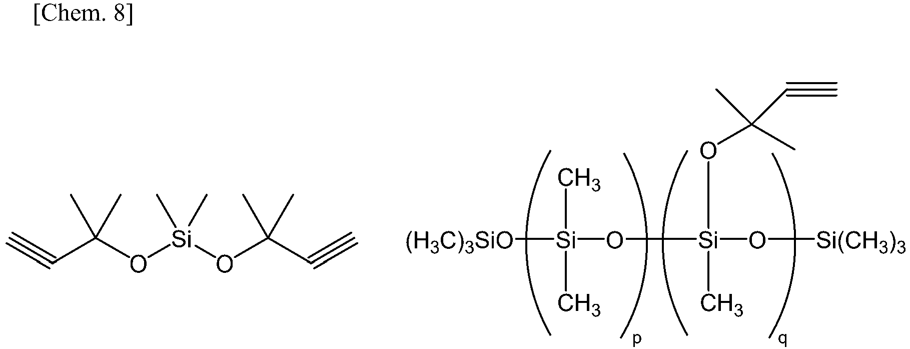

Herein p is an integer of 0 to 50, and q is an integer of 1 to 50, preferably 3 to 50. The siloxane units within parentheses may be arranged in an arbitrary order.

The amount of component (F) blended is preferably 0.0001 to 5 parts by weight, more preferably 0.001 to 3 parts by weight, even more preferably 0.01 to 1 part by weight per 100 parts by weight of component (A). Component (F) may be used alone or in admixture.

### [7] Component (G)

In the addition curable silicone composition, a reinforcing silica may be blended for reinforcing mechanical strength. Examples of the reinforcing silica include fumed silica, precipitated silica, fired silica, powdered quartz, and diatomaceous earth. Finely divided silica having a specific surface area of at least 50 m²/g, especially 50 to 500 m²/g as measured by the BET method is preferred. Although the finely divided silica may be used as such, the finely divided silica may be treated with an organosilicon compound such as a methylchlorosilane, dimethylpolysiloxane or hexamethyldisilazane, prior to use for imparting flow to the composition.

When used, the amount of component (G) is preferably 0.1 to 200 parts by weight, more preferably 1 to 100 parts by weight per 100 parts by weight of component (A). Component (G) may be used alone or in admixture.

### [8] Other components

In addition to the foregoing components, a tackifier other than component (C) or a reinforcing silicone resin may be blended in the addition curable silicone composition as long as the objects of the invention are not impaired.

Examples of the tackifier other than component (C) include silane coupling agents such as γ-acryloxypropyltrimethoxysilane, γ-methacryloxypropyltrimethoxysilane, β-(3,4-epoxycyclohexyl)ethyltrimethoxysilane, γ-glycidoxypropyltrimethoxysilane, γ-glycidoxypropylmethyldiethoxysilane, N-β-(aminoethyl)-y-aminopropyltrimethoxysilane, γ-aminopropyltriethoxysilane, γ-mercaptopropyltrimethoxysilane, γ-glycidoxypropyltriisopropenoxysilane, and γ-glycidoxypropylmethyldiisopropenoxysilane, allyl glycidyl ether, vinylcyclohexene monoxide, diethyl 2-allylmalonate, allyl benzoate, diallyl phthalate, tetraallyl pyromellitate (tradename, TRIAM 805, FUJIFILM Wako Pure Chemical Corp.), and triallyl isocyanurate.

When added, the amount of the tackifier other than component (C) is preferably at least 0.05 part by weight per 100 parts by weight of component (A), more preferably 0.5 to 10 parts by weight when rubber elasticity and adhesiveness are taken into account.

The addition curable silicone composition may be prepared by mixing the foregoing components until uniform. The mixing method may accord with prior art well-known methods and a planetary mixer is a typical mixing instrument. The components may be mixed all at once or one or more components may be mixed in several stages. A two-pack system is also acceptable wherein two packs are mixed immediately before use.

### [Silicone cured product]

The addition curable silicone composition is cured into a silicone cured product.

The curing method and conditions are the same as used for well-known curable silicone rubber compositions. The composition is fully curable at normal temperature and may be heated if necessary. In the case of heat curing, the composition is preferably cured by heating at a temperature of 60 to 200°C, especially 80 to 170°C. The curing time is generally about 1 minute to 24 hours although it varies with the curing temperature and shaping method.

### [Joined assembly]

The invention also provides a joined assembly which is composed of a plurality of (especially two) members of identical or different material bonded by the silicone cured product (i.e., bonding member in the form of silicone rubber cured product).

In the joined assembly, each of the members is preferably selected from organic resin members and metal members. More preferably at least one of the plural members is an organic resin member. Typical of the combination of members are a combination of members of identical or different organic resin and a combination of a metal member with an organic resin member.

Examples of the organic resin constituting the organic resin member include PBT (polybutylene terephthalate resin), PPS (polyphenylene sulfide resin), polyamide resins such as PA66 (nylon 66) and PA6 (nylon 6), and PC (polycarbonate resin). Examples of the metal constituting the metal member include aluminum, iron, stainless steel (SUS) and copper. Of these, the PPA resin is most preferred because of its very high strength and rigidity as well as wear resistance, chemical resistance and heat resistance.

The joined assembly is prepared by manually applying or mechanically dispensing an addition curable silicone composition to the surface of one organic resin or metal member so as to define the shape of a joint (e.g., gasket), mating the other member to the one member, and curing the composition according to the above-mentioned bonding method to bond the members. Thereafter, the members are secured by means of bolts, if necessary.

Examples of the joined assembly include automobile parts such as engines, transmissions, automobile electric parts like electronic control units (ECU) and power control units (PCU) and electric/electronic parts as mounted in smartphones, tablets, liquid crystal displays, and batteries. Preference is given to automobile parts and electric/electronic parts.

In a preferred embodiment, the joined assembly is easy to disassemble in that during normal service, the members are joined by a certain bonding force, and after microwave irradiation, the bonding force is reduced to a sufficient level to allow the members to be separated apart. Specifically, the joined assembly preferably has an initial shear bonding force of at least 1.5 MPa, more preferably at least 2.0 MPa. After microwave irradiation, the joined assembly preferably has a shear bonding force of up to 1 MPa. The shear bonding force is measured according to the method of JIS K6850: 1999. In order that the initial shear bonding force and the shear bonding force after microwave irradiation fall in the above ranges, the addition curable silicone composition is formulated to a composition within the above-mentioned specific range.

### [Disassembly method]

The invention provides a method for disassembling a joined assembly comprising the steps of heating the cured product of the addition curable silicone composition (or adhesive silicone rubber cured product) by microwave irradiation, whereupon the members spontaneously separate apart or the member is separated from the other member by manual forcing or using a scraper or similar tool. The disassembled members are ready for recycling.

The microwave irradiation is preferably performed at such a frequency, power and time that the bonding force is lowered to a sufficient level to allow the members to be separated apart. For example, the frequency may be selected in the range of 300 MHz to 300 GHz. The power may be selected in the range of 300 W to 5,000 W. The irradiation time is up to 30 minutes, preferably up to 15 minutes, though not critical.

### EXAMPLES

Examples and Comparative Examples are given below for further illustrating the invention, but the invention is not limited thereto. In the following Examples, Vi stands for vinyl, Me stands for methyl, the kinematic viscosity is measured at 25°C by an Ostwald viscometer, and Mw is measured by GPC versus polystyrene standards.

### [1] Preparation of addition curable silicone composition

### [Examples 1-1 to 1-7 and Comparative Examples 1-1 to 1-4]

Addition curable silicone compositions were prepared by mixing the following components in the amounts (pbw) shown in Tables 1 and 2.

### Component (A)

(A-1) both end dimethylvinylsilyl-capped dimethylpolysiloxane having a kinematic viscosity of 100,000 mm²/s at 25°C and a vinyl content of 0.0025 mol/100 g
(A-2) polysiloxane consisting of Me₃SiO_{1/2} units, Me₂ViSiO_{1/2} units, and SiO_{4/2} units, which is solid at 25°C (molar ratio of Me₃SiO_{1/2} units : Me₂ViSiO_{1/2} units : SiO_{4/2} units = 7:1:10, Mw 4,000, vinyl content 0.08 mol/100 g)

### Component (B)

(B-1) organohydrogenpolysiloxane of the following formula

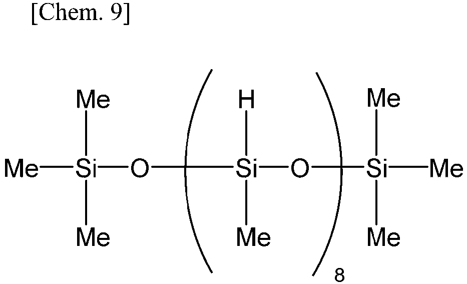

### Component (C)

(C-1) organosilicon compound of the following structural formula

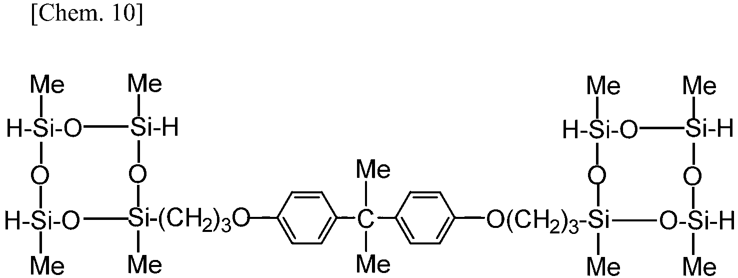

(C-2) organosilicon compound of the following structural formula

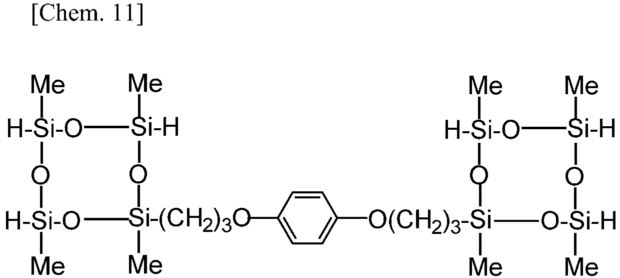

(C-3) organosilicon compound of the following structural formula

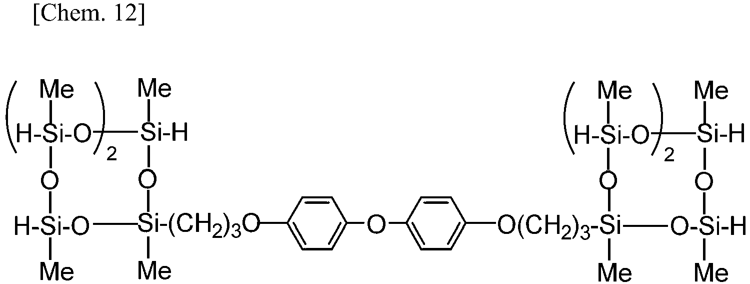

(C'-4) cyclic organohydrogenpolysiloxane of the following structural formula

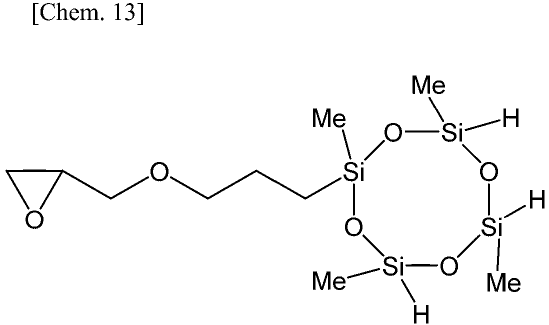

(C'-5) cyclic organohydrogenpolysiloxane of the following structural formula

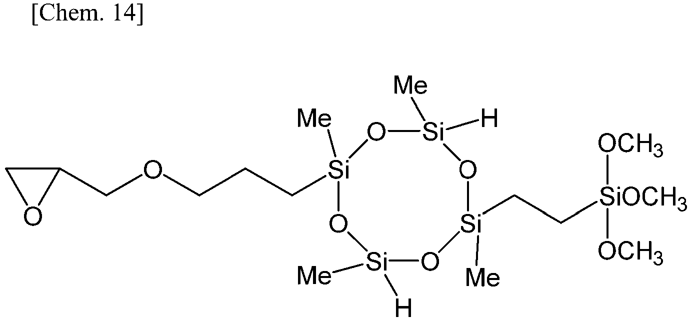

### Component (D)

(D-1) toluene solution (Pt concentration 0.5 wt%) of platinum-divinyltetramethyldisiloxane complex

### Component (E)

(E-1) green silicon carbide powder (Sinano-Rundum GP, particle size #400, by Shinano Electric Refining Co., Ltd.)
(E-2) green silicon carbide powder (Sinano-Rundum GP, particle size #4000, by Shinano Electric Refining Co., Ltd.)

### Component (F)

(F-1) ethynyl cyclohexanol (addition reaction inhibitor)

**[Table 1]**

| | Example | | | | | | | | |
|---|---|---|---|---|---|---|---|---|---|
| | 1-1 | 1-2 | 1-3 | 1-4 | 1-5 | 1-6 | 1-7 | 1-8 | 1-9 |
| (A-1) | 80 | 80 | 80 | 80 | 80 | 80 | 80 | 80 | 80 |
| (A-2) | 20 | 20 | 20 | 20 | 20 | 20 | 20 | 20 | 20 |
| (B-1) | 2.2 | 2.2 | 2.2 | 2.2 | 2.2 | 2.2 | 2.2 | 2.2 | 2.2 |
| (C-1) | 3.0 | | | 3.0 | | | 3.0 | 3.0 | 3.0 |
| (C-2) | | 3.0 | | | 3.0 | | | | |
| (C-3) | | | 3.0 | | | 3.0 | | | |
| (D-1) | 0.15 | 0.15 | 0.15 | 0.15 | 0.15 | 0.15 | 0.15 | 0.15 | 0.15 |
| (E-1) | 29.5 | 29.5 | 29.5 | | | | | | |
| (E-2) | | | | 29.5 | 29.5 | 29.5 | 58.0 | 44.5 | 14.5 |
| (F-1) | 0.15 | 0.15 | 0.15 | 0.15 | 0.15 | 0.15 | 0.15 | 0.15 | 0.15 |

**[Table 2]**

| | Comparative Example | | | | | | |
|---|---|---|---|---|---|---|---|
| | 1-1 | 1-2 | 1-3 | 1-4 | 1-5 | 1-6 | 1-7 |
| (A-1) | 80 | 80 | 80 | 80 | 80 | 80 | 80 |
| (A-2) | 20 | 20 | 20 | 20 | 20 | 20 | 20 |
| (B-1) | 2.2 | 2.2 | 2.2 | 2.2 | 2.2 | 2.2 | 2.2 |
| (C-1) | 3 | 3 | | | 3 | | |
| (C-2) | | | 3 | | | | |
| (C-3) | | | | 3 | | | |
| (C'-4) | | | | | | 4.5 | |
| (C'-5) | | | | | | | 3.2 |
| (D-1) | 0.15 | 0.15 | 0.15 | 0.15 | 0.15 | 0.15 | 0.15 |
| (E-1) | | 0.5 | 0.5 | 0.5 | | | |
| (E-2) | | | | | 0.5 | 29.5 | 29.5 |
| (F-1) | 0.15 | 0.15 | 0.15 | 0.15 | 0.15 | 0.15 | 0.15 |

### [2] Preparation of cured product and joined assembly

### [Examples 2-1 to 2-9 and Comparative Examples 2-1 to 2-7]

A joined assembly was prepared by laying two plates of 25 mm wide, 100 mm long and 2 mm thick so as to longitudinally overlap in an area of 10 mm, applying each of addition curable silicone compositions of Examples 1-1 to 1-9 and Comparative Examples 1-1 to 1-7 between the plates so as to define a bond area of 25 mm by 10 mm and a thickness of 2 mm between the plates, and heating at 150°C for 60 minutes until the composition was cured.

The materials of the plates were combined as follows.

| | |
|---|---|
| Joined assembly 1: | joining of PPS resin members (Susteel GS-40, glass fiber 40 wt%, by Tosoh Corp.) |
| Joined assembly 2: | joining of PPS resin member (Susteel GS-40, glass fiber 40 wt%, by Tosoh Corp.) with diecast aluminum (ADC12, JIS H 5302: 2006) |
| Joined assembly 3: | joining of PPS resin members (Torelina A503-F1, by Toray Industries Inc.) |
| Joined assembly 4: | joining of PPS resin member (Torelina A503-F1, by Toray Industries Inc.) with diecast aluminum (ADC12, JIS H 5302: 2006) |

The joined assembly prepared above was evaluated for bonding force and ease of disassembling by the following evaluation methods. The results are shown in Tables 3 and 4.

### (1) Initial bonding force

The joined assembly prepared above was measured for shear bonding force according to the method of JIS K6850: 1999. A sample having a shear bonding force of at least 2.0 MPa was rated Pass (○) whereas a sample having a shear bonding force of less than 2.0 MPa was rated Reject (×).

### (2) Disassembling (after high temperature exposure and microwave irradiation)

The joined assembly was held in an oven at 150°C for 100 hours and 500 hours and cooled to room temperature. Using µReactor Ex (Shikoku Instrumentation Co., Ltd.), this sample was irradiated with microwave radiation at frequency 2.4 GHz and power 1,000 W for 6 minutes. The joined assembly was taken out immediately after irradiation. With one of the two plates being fixedly secured, the other plate was manually peeled in a perpendicular direction to the bond surface. The peeled plate was observed whether the failure mode was interfacial peeling or cohesive failure.

**[Table 3]**

| | | Example | | | | | | | | |
|---|---|---|---|---|---|---|---|---|---|---|
| | | 2-1 | 2-2 | 2-3 | 2-4 | 2-5 | 2-6 | 2-7 | 2-8 | 2-9 |
| Addition curable silicone composition | | Example | | | | | | | | |
| | | 1-1 | 1-2 | 1-3 | 1-4 | 1-5 | 1-6 | 1-7 | 1-8 | 1-9 |
| Joined assembly 1 | Bonding force | ○ | ○ | ○ | ○ | ○ | O | ○ | ○ | ○ |
| | Disassembling after 150°C/100 hr heating | interfacial peeling | interfacial peeling | interfacial peeling | interfacial peeling | interfacial peeling | interfacial peeling | interfacial peeling | interfacial peeling | interfacial peeling |
| | Disassembling after 150°C/500 hr heating | interfacial peeling | interfacial peeling | interfacial peeling | interfacial peeling | interfacial peeling | interfacial peeling | interfacial peeling | interfacial peeling | interfacial peeling |
| Joined assembly 2 | Bonding force | ○ | ○ | ○ | ○ | ○ | ○ | ○ | ○ | ○ |
| | Disassembling after 150°C/100 hr heating | interfacial peeling | interfacial peeling | interfacial peeling | interfacial peeling | interfacial peeling | interfacial peeling | interfacial peeling | interfacial peeling | interfacial peeling |
| | Disassembling after 150°C/500 hr heating | interfacial peeling | interfacial peeling | interfacial peeling | interfacial peeling | interfacial peeling | interfacial peeling | interfacial peeling | interfacial peeling | interfacial peeling |
| Joined assembly 3 | Bonding force | ○ | ○ | ○ | ○ | ○ | ○ | ○ | ○ | ○ |
| | Disassembling after 150°C/100 hr heating | interfacial peeling | interfacial peeling | interfacial peeling | interfacial peeling | interfacial peeling | interfacial peeling | interfacial peeling | interfacial peeling | interfacial peeling |
| | Disassembling after 150°C/500 hr heating | interfacial peeling | interfacial peeling | interfacial peeling | interfacial peeling | interfacial peeling | interfacial peeling | interfacial peeling | interfacial peeling | interfacial peeling |
| Joined assembly 4 | Bonding force | ○ | ○ | ○ | ○ | ○ | ○ | ○ | ○ | ○ |
| | Disassembling after 150°C/100 hr heating | interfacial peeling | interfacial peeling | interfacial peeling | interfacial peeling | interfacial peeling | interfacial peeling | interfacial peeling | interfacial peeling | interfacial peeling |
| | Disassembling after 150°C/500 hr heating | interfacial peeling | interfacial peeling | interfacial peeling | interfacial peeling | interfacial peeling | interfacial peeling | interfacial peeling | interfacial peeling | interfacial peeling |

**[Table 4]**

| | | Comparative Example | | | | | | |
|---|---|---|---|---|---|---|---|---|
| | | 2-1 | 2-2 | 2-3 | 2-4 | 2-5 | 2-6 | 2-7 |
| Addition curable silicone composition | | Comparative Example | | | | | | |
| | | 1-1 | 1-2 | 1-3 | 1-4 | 1-5 | 1-6 | 1-7 |
| Joined assembly 1 | Bonding force | ○ | ○ | ○ | ○ | ○ | ○ | ○ |
| | Disassembling after 150°C/100 hr heating | cohesive failure | cohesive failure | cohesive failure | cohesive failure | cohesive failure | cohesive failure | cohesive failure |
| | Disassembling after 150°C/500 hr heating | cohesive failure | cohesive failure | cohesive failure | cohesive failure | cohesive failure | cohesive failure | cohesive failure |
| Joined assembly 2 | Bonding force | ○ | ○ | ○ | ○ | ○ | ○ | ○ |
| | Disassembling after 150°C/100 hr heating | cohesive failure | cohesive failure | cohesive failure | cohesive failure | cohesive failure | cohesive failure | cohesive failure |
| | Disassembling after 150°C/500 hr heating | cohesive failure | cohesive failure | cohesive failure | cohesive failure | cohesive failure | cohesive failure | cohesive failure |
| Joined assembly 3 | Bonding force | ○ | ○ | ○ | ○ | ○ | ○ | ○ |
| | Disassembling after 150°C/100 hr heating | cohesive failure | cohesive failure | cohesive failure | cohesive failure | cohesive failure | cohesive failure | cohesive failure |
| | Disassembling after 150°C/500 hr heating | cohesive failure | cohesive failure | cohesive failure | cohesive failure | cohesive failure | cohesive failure | cohesive failure |
| Joined assembly 4 | Bonding force | ○ | ○ | ○ | ○ | ○ | ○ | ○ |
| | Disassembling after 150°C/100 hr heating | cohesive failure | cohesive failure | cohesive failure | cohesive failure | cohesive failure | cohesive failure | cohesive failure |
| | Disassembling after 150°C/500 hr heating | cohesive failure | cohesive failure | cohesive failure | cohesive failure | cohesive failure | cohesive failure | cohesive failure |

As shown in Tables 3 and 4, the joined assemblies bonded with the cured products of the addition curable silicone compositions prepared in Examples, even after high-temperature exposure of 150°C/500 hr, allowed for interfacial peeling by microwave irradiation, i.e., a small amount of energy consumption for a short time, without leaving adhesive residues on the adherend surface.

In contrast, when the composition of Comparative Example 1-1 not containing the particles of heat generation on microwave irradiation and the compositions of Comparative Examples 1-2 to 1-4 containing the particles of heat generation on microwave irradiation in amounts less than the specific range are used, disassembling is impossible.

When the compositions of Comparative Examples 1-6 and 1-7 in which the amounts of the particles of heat generation on microwave irradiation are within the specific range and component (C) is changed to a SiH group-containing compound free of an arylene skeleton are used, interfacial peeling is not facilitated by microwave irradiation after high-temperature exposure of 150°C/100 hr. Instead, cohesive failure occurs, leaving adhesive residues on the adherend surface.

## Claims

1. An addition curable silicone composition comprising
(A) 100 parts by weight of an organopolysiloxane having at least two silicon-bonded alkenyl groups per molecule,
(B) 0.1 to 10 parts by weight of a linear organohydrogenpolysiloxane having at least two silicon-bonded hydrogen atoms per molecule,
(C) 0.1 to 10 parts by weight of an organosilicon compound bearing an arylene skeleton and having a silicon-bonded hydrogen atom,
(D) a hydrosilation reaction catalyst, and
(E) 1 to 100 parts by weight of particles capable of heat generation on microwave irradiation.

2. The silicone composition of claim 1 wherein component (C) is an organosilicon compound having the general formula (1): 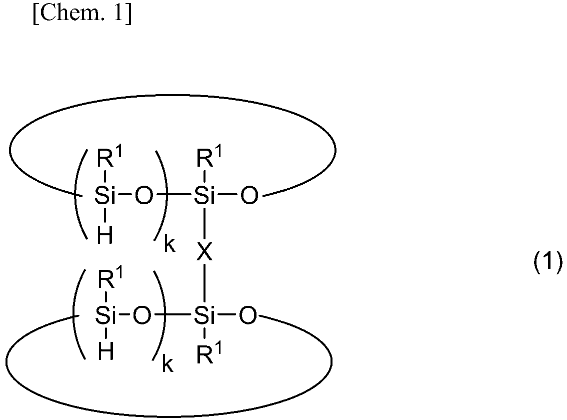 wherein R¹ is each independently a C₁-C₆ alkyl group, X is a divalent organic group which has one or more phenylene skeletons and may contain an ether bond, and k is each independently an integer of 3 to 5.

3. The silicone composition of claim 2 wherein X is a group having the formula (2), (3) or (4): 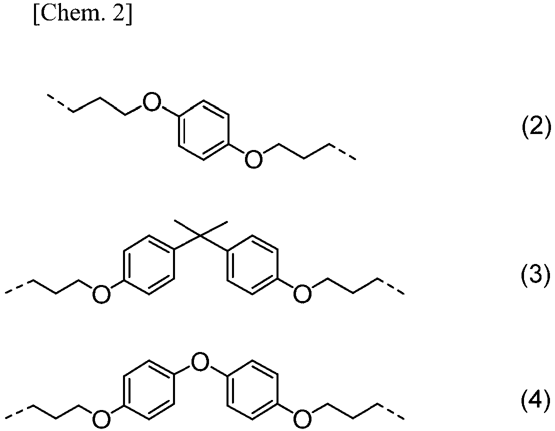 wherein the broken line designates a point of attachment to a silicon atom.

4. The silicone composition of claim 1 wherein the particles capable of heat generation on microwave irradiation are particles containing at least one member selected from carbon, iron oxide, titanium oxide and silicon carbide.

5. A silicone cured product obtained by curing the addition curable silicone composition of any one of claims 1 to 4.

6. A joined assembly comprising a plurality of members bonded by the cured product of claim 5.

7. The joined assembly of claim 6 wherein at least one of the plurality of members is formed of a polyphenylene sulfide resin.

8. A method for disassembling the joined assembly of claim 6, comprising the steps of irradiating the cured product with microwave and separating the plurality of members apart.

9. The disassembling method of claim 7 wherein the disassembling step includes peeling the cured product of the addition curable silicone composition from the plurality of members using peeling means.
